Europäisches Patentamt

European Patent Office

Office européen des brevets

(19)

(11) Numéro de publication: **0 203 016**
**B1**

(12) **FASCICULE DE BREVET EUROPEEN**

(45) Date de publication du fascicule du brevet:
**06.09.89**

(51) Int. Cl.⁴: **A22C 17/04**

(21) Numéro de dépôt: **86420127.2**

(22) Date de dépôt: **16.05.86**

(54) **Dispositif de découpe, notamment entre deux zones de dureté différente.**

(30) Priorité: **20.05.85 FR 8508276**

(43) Date de publication de la demande:
**26.11.86 Bulletin 86/48**

(45) Mention de la délivrance du brevet:
**06.09.89 Bulletin 89/36**

(84) Etats contractants désignés:
**AT BE CH DE GB IT LI LU NL SE**

(56) Documents cités:
**EP-A- 0 056 656**
**DE-A- 3 227 302**

(73) Titulaire: **ETABLISSEMENTS ARRIVE S.A. (Société Anonyme de droit français), F-85250 Saint Fulgent(FR)**
Titulaire: **UNION FINANCIERE POUR LE DEVELOPPEMENT DE L'ECONOMIE CEREALIERE-UNIGRAINS (Société Anonyme de droit français), 8, avenue du Président Wilson, F-75016 Paris(FR)**

(72) Inventeur: **Villemin, Daniel, 19, rue Condorcet, F-94430 Chennevieres sur Merne(FR)**
Inventeur: **Romand, Paul, 31, avenue de Verdun, F-26000 Valence(FR)**

(74) Mandataire: **Maureau, Philippe et al, Cabinet Germain & Maureau Le Britannia - Tour C 20, bld Eugène Déruelle Boîte Postale 3011, F-69392 Lyon Cédex 03(FR)**

## Description

La présente invention a pour objet un dispositif de découpe, plus spécialement destiné à réaliser une découpe au niveau de l'interface entre deux zones de dureté différente.

Un tel problème se pose lors de la découpe en boucherie d'un animal, y compris des grosses volailles, où, par exemple, il est important de pouvoir séparer la viande de l'os, au plus près de celui-ci, afin d'éviter les pertes de viande.

Les appareils utilisés actuellement, tels que couteaux et scies, ne donnent pas satisfaction car, outre le fait qu'ils doivent le plus souvent être actionnés manuellement, ils ne peuvent suivre de suffisamment près le contour de l'os, risquent d'ébrécher celui-ci, ce qui laisse des éclats d'os à l'intérieur de la viande, et ne peuvent pas s'orienter automatiquement et rapidement perpendiculairement aux produits à trancher.

Le document EP-A 0 056 656 concerne un appareil destiné à réaliser la séparation entre de la viande et des os, comprenant une chaîne entraînée en translation constitué par un fil central flexible et de haute résistance sur lequel sont fixés à intervalles réguliers des éléments de section prismatique comportant des arêtes de coupe. Dans ce cas encore, le montage fixe des éléments de coupe sur le fil risque de provoquer un ébrêchement de l'os, lorsque la chaîne rencontre celui-ci.

La présente invention vise à pallier les lacunes de la technique existante.

A cet effet, le dispositif qu'elle concerne, du type comprenant une chaîne qui, associée à des moyens d'entraînement en translation, comporte, répartis sur sa longueur, des éléments de coupe de section polygonale dont les arêtes sont tranchantes, est caractérisé en ce qu'il comporte, en outre, de éléments intercalaires, disposés entre les éléments de coupe, dont la surface tournée vers l'extérieur est située à une distance de l'axe longitudinal de la chaîne inférieure à la distance entre cet axe et les arêtes tranchantes, et en ce que les éléments de coupe sont montés de façon à pouvoir pivoter autour de l'axe longitudinal de la chaîne.

En fonction des besoins, il est possible de réaliser un montage alterné des éléments de coupe et des éléments intercalaires, ou au contraire de juxtaposer plusieurs éléments de coupe et plusieurs éléments intercalaires.

Lorsque la découpe doit être réalisée le long d'une surface dure, telle qu'un os, dans le cas d'une découpe en boucherie, une des face de chaque élément de coupe vient en appui contre la surface dure, ce qui est permis par la libre orientation angulaire des éléments, et l'arête de chaque élément située en avant dans le sens de pénétration de la chaîne dans la pièce à découper, assure la coupe.

Lorsqu'il s'agit de trancher dans une surface homogène, les éléments coupants s'orientent automatiquement, de telle sorte qu'une arête tranchante se trouve située en avant dans le sens de pénétration de la chaîne dans la pièce à découper.

Cette technique est très précise, et la chaîne réagit à des différences de dureté très peu sensibles, puisqu'il est possible d'effectuer une découpe entre la partie maigre de la viande et une partie formée d'aponévrose.

Les éléments intercalaires assurent tout d'abord une limitation de la pénétration des arêtes tranchantes à l'intérieur de la pièce à trancher, ce qui évite la coupe de produits durs tels que les os.

En outre, les éléments intercalaires favorisent la rotation des éléments tranchants lorsque ceux-ci recontrent un obstacle. Enfin, ils constituent une ligne porteuse auto-adaptable à la forme du produit à désosser en plaquant les éléments coupants contre la partie osseuse.

Selon une première forme d'exécution de ce dispositif, chaque élément de coupe possède une section constant sur toute sa longueur.

Selon une autre possibilité, chaque élément de coupe possède une section croissant de son extrémité avant à son extrémité arrière.

Conformément à une possibilité envisageable dans l'un ou l'autre cas, l'extrémité avant de chaque élément de coupe est profilée ou biseautée.

Les faces de chaque élément de coupe, correspondant à chaque zone située entre deux arêtes tranchantes voisines, pevent être planes, ou incurvées vers l'extérieur ou vers l'intérieur selon le cas.

Pour leur part, les éléments intercalaires peuvent être de section constante ou présenter au contraire une forme générale sphérique favorisant les déformations de la chaîne.

Conformément à une forme d'exécution de ce dispositif, les éléments de coupe et les éléments intercalaires présentent chacun un perçage central servant au passage d'un fil porteur réalisé en un matériau inextensible, tel qu'un câble métallique multibrins.

Cette technique est intéressante en raison de la simplicité de réalisation de la chaîne ainsi que par la grande capacité de déformation multidirectionnelle de celle-ci, procurée par le câble.

Avantageusement, les moyens assurant la fermeture du câble sur lui-même, dans le cas d'une chaîne fermée, sont constitués par un élément intercalaire présentant un passage de section égale au double de la section du câble dans lequel les deux extrémités de celui-ci sont engagées et sont bloquées par élargissement de chaque extrémité du câble, par exemple par dépôt d'une boule de brasure.

Conformément à une autre d'exécution de ce dispositif, la chaîne est obtenue par assemblage de pièces identiques les unes aux autres dont chacune comprend une extrémité avant en forme générale de rotule, et une extrémité arrière dans laquelle est ménagée une cavité de forme complémentaire, permettant le logement de la rotule d'une pièce adjacente, chaque pièce présentant, sur sa longueur, deux zones de sections différentes, dont celle de plus grande section remplit la fonction d'élément intercalaire et dont celle de plus petite section, de forme cylindrique, permet l'engagement d'un outil de coupe présentant un perçage cylindrique correspondant.

Cette solution permet d'éviter l'utilisation d'un fil porteur central.

De toute façon, l'invention sera bien comprise à l'aide de la description qui suit, en référence au dessin schématique annexé, représentant, à titre d'exemples non limitatifs, plusieurs formes d'exécution de ce dispositif:

Figure 1 est une vue d'un premier circuit de chaîne de découpe;

Figure 2 est une vie très sommaire de la découpe de viande le long de la carcasse d'une dinde à l'aide du dispositif de figure 1;

Figure 3 est une vue du détail (A) de figure 2;

Figures 4, 6, 8 et 10 sont quatre vues de côté de quatre tronçons de chaîne de types différents;

Figures 5, 7, 8 et 11 sont quatre vues en coupe respectivement selon les lignes V-V de figure 4, VII-VII de figure 6, IX-IX de figure 8 at XI-XI de figure 10;

Figures 12 à 14 sont trois vues correspondant à trois sections différentes d'éléments de coupe;

Figure 15 est une vue de l'assemblage des deux extrémités d'une chaîne comprenant un câble central;

Figure 16 est une vue de côté, partiellement en coupe longitudinale, de deux éléments constitutifs d'une autre chaîne;

Figure 17 est une vue d'un dispositif de découpe mettant en oeuvre un autre circuit de la chaîne.

Le dispositif selon l'invention comprend une chaîne (2) passant, dans la forme d'exécution représentée au dessin, sur deux poulies (3) et (4) dont celle (4) est motorisée. Un galet (5) associé à un ressort (6) maintient la chaîne sous la tension souhaitée.

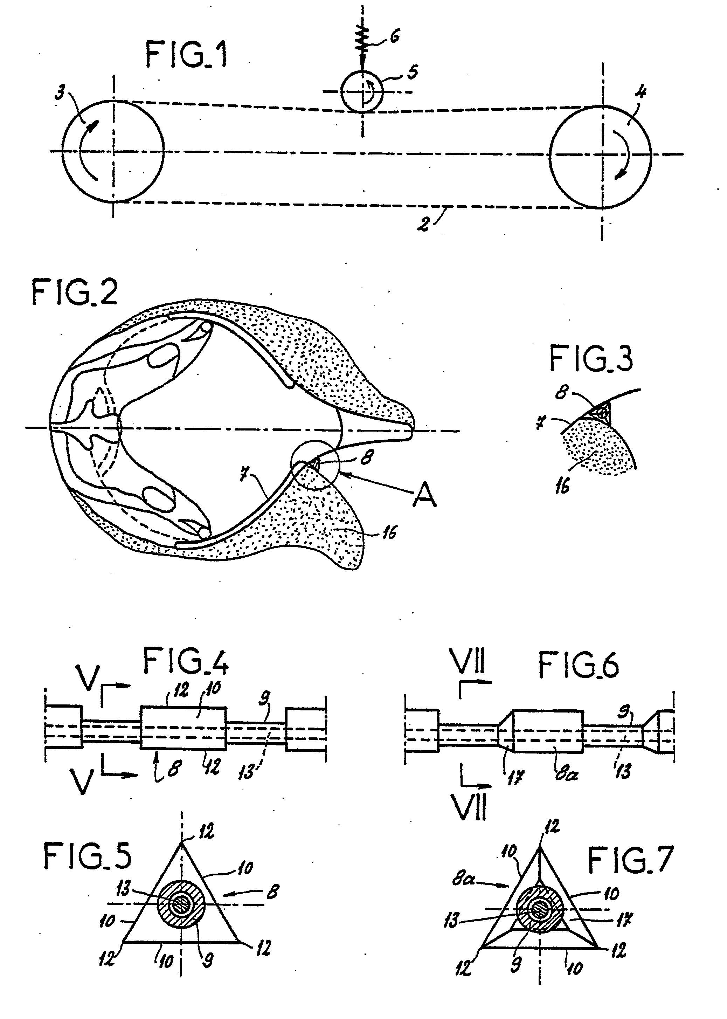

Un tel circuit est bien adapté à la découpe le long d'une surface de forme compliquée, telle que la carcasse (7) d'une dinde représentée à la figure 2.

La figure 17 représente une variante de circuit de cette chaîne dans laquel celle-ci comporte une pluralité de brins parallèles permettant la découpe de plusieurs tranches d'un produit.

La chaîne équipant le dispositif de découpe comprend une succession d'éléments de coupe (8) et d'éléments intercalaires(9).

Dans la forme d'exécution représenté aux figures 4 et 5, chaque élément de coupe est de forme triangulaire présentant trois faces planes (10) séparées les unes des autres par trois arêtes (12). Pour leur part, les entretoises (9) sont de forme cylindrique et leur rayon est inférieur à la distance entre la chaîne et chaque face (10) d'un élément de coupe.

Les éléments (8) et (9) présentent chacun un perçage central permettant leur enagement sur un câble (13) qui est avantageusement un câble métallique multibrins. Ce câble est fermé sur lui-même par engagement de ses extrémités dans un élément intercalaire (14) présentant une ouverture centrale de section égale au double de la section du câble. Après traversée par les deux extrémités du câble de l'élément intercalaire (14), ces extrémités sont élargies par exemple par dépôt d'une boule de brasure (15), qui empêche chaque extrémité du câble de retraverser l'élément intercalaire (14).

En pratique, lors de la découpe de la viande (16) entourant la carcasse (7), chaque élément de coupe (8) de positionne par appui de l'une de ses faces (10) contre la carcasse (7), l'arête (12), située en avant dans le sens de déplacement de la chaîne, réalisant la découpe de la viande.

Les figures 6 à 11 représentent les variantes de réalisation de la chaîne, les mêmes références désignant les mêmes éléments que précédemment.

Dans la forme d'exécution représentée à la figure 6, chaque élément de coupe (8a) présente une section constante, et est prolongé à son extrémité avant par une partie profilée (17).

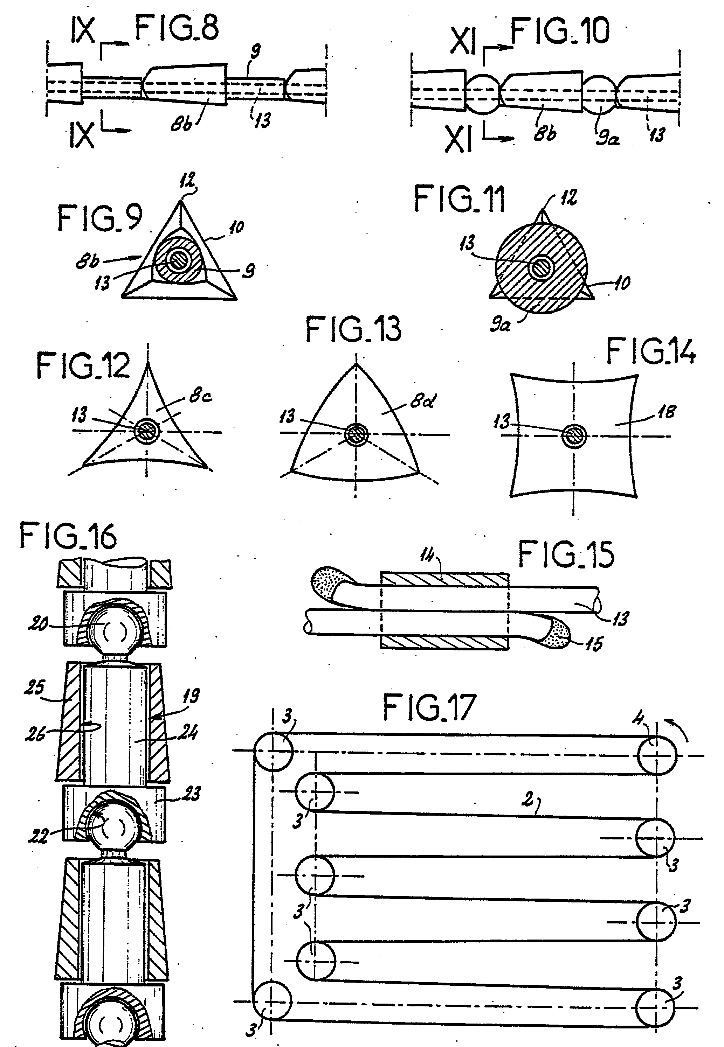

Dans la forme d'exécution représentée aux figures 8 et 9, chaque élément de coupe (8b) est profilé sur toute sa longueur, sa section étant croissante de don extrémité avant à son extrémité arrière.

Dans la forme d'exécution représentée aux figures 10 et 11, les éléments de coupe (8b) sont identiques à ceux définis précédemment, mais les entretoises (9a) présentent une forme générale sphérique, de diamètre supérieur à la distance entre le centre de la chaîne et les côtés (10) de l'élément coupant, mais inférieur à la distance le centre de la chaîne et les arêtes (12) des éléments coupants.

Les figures 12 et 13 représentent deux variantes de l'élément de coupe précédent, correspondant à deux éléments toujours de forme générale triangulaire, mais dans lesquels celui (8c) de figure 12 présente des surfaces incurvées vers l'intérieur et celui (8d) de figure 13 présente des surfaces incurvées vers l'extérieur.

Le figure 14 représente, vue en bout, une variante d'un élément de coupe (18) de forme générale carrée dont les faces latérales sont incurvées vers l'intérieur.

La figure 16 représente une variante de réalisation de cette chaîne dans laquelle celle-ci est obtenue par assemblage de pièces (19) identiques les unes aux autres, dont chacune présente une extrémité avant (20) en forme de rotule, et possède une extrémité arrière dans laquelle est ménagée une cavité (22) de forme complémentaire de celle de la rotule, chaque pièce comprenant, sur sa longueur, deux zones de sections différentes dont celle (23) postérieure de plus grande section remplit la fonction d'éléments intercalaires et dont celle centrals (24) de plus faible section, et de forme cylindrique, permet l'engagement d'un outil de coupe (25) présentant un perçage cylindrique (26).

Cette solution permet d'éviter l'utilisation d'un câble porteur central.

Comme il ressort de ce qui précède, l'invention apporte une grande amélioration à la technique existante en fournissant un dispositif de coupe, de conception simple, et extrêmement performant.

Comme il va de soi, l'invention ne se limite pas aux seules formes d'exécution de ce dispositif, ni à ses seules applications décrites ci-dessus à titre d'exemples ; elle en embrasse, au contraire, toutes les variantes de réalisation.

C'est ainsi notamment que le nombre, le forme et l'usinage des faces de chaque élément de coupe pourraient être différents, que la chaîne, fermée ou non, pourrait être constituée d'une succession d'éléments de coupe ou d'éléments de coupe et d'éléments intercalaires disposés sés de façon variable les uns par rapport aux autres, que le système pourrait être adaptable à différents moyens de mise en oeuvre comme des poulies, des bobines ou autres supports animés d'un mouvement continu, alternatif ou vibrant, ou encore que le dispositif pourrait être utilisé pour réaliser une découpe entre deux matières de dureté différente, que ce soit dans la viande pour séparer, outre l'os du maigre, le maigre du gras, le gras de la couenne, la peau de la chair... ou dans toute autre matière, sans que l'on sorte pour autant de cadre de l'invention.

**Revendications**

1. Dispositif de découpe, du type comprenant une chaîne (2) qui, associé à des moyens d'entraînement en translation, comporte, répartis sur sa longueur, des éléments de coupe (8) de section polygonale dont les arêtes (12) sont tranchantes, caractérisé en ce qu'il comporte, en outre, des éléments intercalaires (9), disposés entre les éléments de coupe (8), dont la surface tournée vers l'extérieur est située à une distance de l'axe longitudinal de la chaîne inférieure à la distance entre cet axe et les arêtes tranchantes (12), et en ce que les éléments de coupe (8) sont montés de façon à pouvoir pivoter autour de l'axe longitudinal de la chaîne.

2. Dispositif selon la revendication 1, caractérisé en ce que chaque élément de coupe (8) possède une section constante sur toute sa longueur.

3. Dispositif selon la revendication 1, caractérisé en ce que chaque élément de coupe (8b) possède une section croissante de son extrémité avant à son extrémité arrière.

4. Dispositif selon l'une quelconque des revendications 2 et 3, caractérisé en ce que l'extrémité avant (17) de chaque élément de coupe (8a, 8b) est profilée ou biseautée.

5. Dispositif selon l'une quelconque des revendications 1 à 4, caractérisé en ce que les éléments intercalaires (9) possèdent une section constante sur toute leur longueur.

6. Dispositif selon l'une quelconque des revendications 1 à 4, caractérisé en ce que les éléments intercalaires (9a) possèdent une forme générale sphérique.

7. Dispositif selon l'une quelconque des revendications 1 à 6, caractérisé en ce que les éléments de coupe (8) et les éléments intercalaires (9) présentent chacun un perçage central servant au passage d'un fil porteur (13) réalisé en un matériau inextensible, tel qu'un câble métallique multibrins.

8. Dispositif selon la revendication 7, caractérisé en ce que dans le cas où la chaîne est fermée sur elle-même les moyens assurant la fermeture du câble central (13) sur lui-même sont constitués par un élément intercalaire (14) présentant un passage de section égale au double de la section du câble dans lequel les deux extrémités de celui-ci sont engagées et sont bloquées par élargissement de chaque extrémité du câble, par exemple par dépôt d'une boule de brasure (15).

9. Dispositif selon l'une quelconque des revendications 1 à 6, caractérisé en ce que la chaîne est obtenue par assemblage de pièces (19) identiques les uns aux autres dont chacune comprend une extrémité avant (20) en forme générale de rotule, et une extrémité arrière dans laquelle est ménagée une cavité (22) de forme complémentaire, permettant le logement de la rotule d'une pièce adjacente, chaque pièce présentant, sur sa longueur, deux zones de sections différentes, dont celle (23) de plus grande section remplit la fonction d'élément intercalaire et dont celle (24) de plus petite section, de forme cylindrique, permet l'engagement d'un outil de coupe (25) présentant un perçage cylindrique correspondant.

**Patentansprüche**

1. Schneidvorrichtung, umfassend eine mit Transportmitteln verbundene Kette (2), die, verteilt auf ihre Länge, Schneidelemente (8) mit polygonalem Querschnitt aufweist, deren Kanten (12) schneidend sind, dadurch gekennzeichnet, daß die Vorrichtung außerdem zwischen den Schneidelementen (8) angeordnete Zwischenschaltelemente (9) aufweist, deren nach außen weisende Oberfläche mit einem geringeren Abstand zu der Längsachse der Kette im Vergleich zu dem Abstand zwischen dieser Achse und den Schneidkanten (12) angeordnet ist, und daß die Schneidelemente (8) in der Weise angebracht sind, daß sie sich um die Längsachse der Kette drehen können.

2. Vorrichtung nach Anspruch 1, dadurch gekennzeichnet, daß jedes Schneidelement (8) über die gesamte Länge einen gleichbleibenden Querschnitt besitzt.

3. Vorrichtung nach Anspruch 1, dadurch gekennzeichnet, daß jedes Schneidelement (8) über seine gesamte Länge einen zunehmenden Querschnitt besitzt.

4. Vorrichtung nach einem der Ansprüche 2 oder 3, dadurch gekennzeichnet, daß das vordere Ende (17) jedes Schneidelements (8a, 8b) profiliert oder abgeschrägt ist.

5. Vorrichtung nach einem der Ansprüche 1 bis 4, dadurch gekennzeichnet, daß die Zwischenschaltelemente (9) über gesamte Länge einen gleichbleibenden Querschnitt besitzen.

6. Vorrichtung nach einem der Ansprüche 1 bis 4, dadurch gekennzeichnet, daß die Zwischenschaltelemente (9a) im wesentlichen kugelförmig sind.

7. Vorrichtung nach einem der Ansprüche 1 bis 6, dadurch gekennzeichnet, daß die Schaltelemente (8) und die Zwischenschaltelemente (9) jeweils eine zentrale Durchgangsbohrung für einen nicht dehnbaren Tragdraht (13), wie z.B. ein metallisches Litzenkabel, aufweisen.

8. Vorrichtung nach Anspruch 7, dadurch gekennzeichnet, daß im Falle, daß die Kette in sich selbst geschlossen ist, die den Verschluß des Zentralkabels (13) in sich selbst sichernden Mittel aus einem Zwischenschaltelement (14) bestehen, welches einen Durchgang von doppeltem Querschnitt des Kabelquerschnitts aufweist, worin die beiden Enden desselben dadurch befestigt und arretiert sind, daß sich die jeweiligen Enden vergrößern, z.B. durch einen Klumpen aus Lötmaterial (15).

9. Vorrichtung nach einem der Ansprüche 1 bis 6, dadurch gekennzeichnet, daß die Kette durch anein-

anderfügen identischer Teile (19) gebildet ist, wovon jedes ein vorderes Ende in Form einer Kugel und ein hinteres Ende aufweist, in welchem eine zur Aufnahme der Kugel eines benachbarten Teiles dienende Ausnehmung entsprechender Form vorgesehen ist, wobei jedes Teil über seine Länge zwei Zonen unterschiedlichen Querschnitts aufweist, wovon diejenige (23) mit dem größeren Querschnitt die Funktion des Zwischenschaltelements erfüllt und diejenige (24) mit dem kleineren, zylindrischen Querschnitt die Aufnahme eines eine entsprechende zylindrische Bohrung aufweisenden Schneidwerkzeugs (25) erlaubt.

plementary shape is provided, enabling the ball of an adjacent piece to be fitted into it, each piece exhibiting along its length two zones of different cross-section, in which that (23) of the larger section provides the function of an interposed unit and that (24) of the smaller cylindrically-shaped section enables a cutting tool (25) having a corresponding cylindrical hole to be fitted.

## Claims

1. A cutting mechanism of the type comprising a chain (2) that, associated with means for driving it with translatory motion, carries spaced out along its length cutting units (8) of polygonal cross-section, having cutting edges (12), characterized in that it also includes interposed units (9) located between the cutting units (8), the outward-facing surfaces of which are situated at a distance from the longitudinal axis of the chain that is less than the distance between that axis and the sharp edges (12), and in that the cutting units (8) are so mounted that they can move around the longitudinal axis of the chain.

2. A mechanism according to Claim 1, characterized in that each cutting unit (8) possesses constant cross-section along the whole of its length.

3. A mechanism according to Claim 1, characterized in that each cutting unit (8b) possesses a cross-section that increases from its front end to its rear end.

4. A mechanism according to either of Claims 2 and 3, characterized in that the front end (17) of each cutting unit (8a, 8b) is profiled or bevelled.

5. A mechanism according to one of Claims 1 to 4, characterized in that the interposed units (9) possess a constant cross-section along the whole of their length.

6. A mechanism according to one of Claims 1 to 4, characterized in that the interposed units (9a) possess a shape that is approximately spherical.

7. A mechanism according to any of Claims 1 to 6, characterized in that each of the cutting units (8) and the interposed units (9) exhibits a central hole allowing the passage of a carrier wire (13) produced of non-stretching material, such as a multi-strand metallic cable.

8. A mechanism according to Claim 7, characterized in that in the case of a closed chain the means ensuring the fastening together of the central cable (13) consist of an interposed unit (14) exhibiting a passage of cross-section equal to double that of the cable, into which the two ends of the latter are engaged and are locked by enlargement of each end of the cable, for example by laying on a knob of brazing metal (15).

9. A mechanism according to any of Claims 1 to 6, characterized in that the chain is obtained by assembling pieces (19) identical to one another, each of which has a front end (20) with the general shape of a ball and a rear end in which a cavity (22) of com-

FIG.1

FIG.2

FIG.3

FIG.4

FIG.5

FIG.6

FIG.7

EP 0 203 016 B1